# EUROPEAN PATENT APPLICATION

(11) **EP 3 334 132 A1**
(43) Date of publication of application: **13.06.2018**
(21) Application number: 15911707.6
(22) Date of filing: 28.12.2015
(51) Int. Cl.: H04M 1/247, G06F 3/0488

(54) **METHOD AND DEVICE FOR SETTING BURN-AFTER-READING MESSAGE BY MEANS OF FORCE TOUCH**

(71) Applicant: Huawei Technologies Co., Ltd., Longgang District Shenzhen, Guangdong 518129 (CN)
(72) Inventor: WANG, Tizheng, Shenzhen Guangdong 518129 (CN)
(74) Representative: Pfenning, Meinig & Partner mbB
(86) International application number: PCT/CN2015/099262
(87) International publication number: WO 2017/113076

(57) **Abstract**

Embodiments of the present invention provide a method for setting a burn-after-reading message by means of a pressure. The method includes: displaying a message exchange interface, where the interface includes at least one message; detecting a pressure value of a screen touch on a first message by a user, where the first message is one of the at least one message; and setting the first message to a burn-after-reading message when it is detected that the pressure value is greater than a preset threshold. By means of this method, the user can quickly set, by means of a force touch (force touch), a message that the user wants to delete, recall, or destruct to a burn-after-reading message, bringing great convenience and desirable experience to the user while protecting user privacy.

## Description

### TECHNICAL FIELD

The present invention relates to the field of communications terminals, and specifically, to a method and an apparatus for setting a burn-after-reading message by means of a pressure.

### BACKGROUND

Users use information exchange applications such as QQ, Postba, WeChat, Weibo, Mop, Qiushibaike, Aliwangwang, Momo, and various forums on smart devices. For ease of description, these applications are generally referred to as exchange applications in this application document. When using the exchange applications, the users usually post several messages and receive a massive amount of information every day.

"Burn after reading" in instant messaging applications is an emerging chat mode that becomes popular among many netizens. The "burn after reading" is a new form of socializing that focuses on "privacy protection", extends psychological boundaries of users during communications, and can make users more attracted to messages. Users are more intrigued to read messages with time limits.

In a chat interface between a user A and a user B, the user A expects a message (including text, audio, a video, an image, and the like), especially, fairly sensitive and private information, sent by the user A to disappear after a specific time after being viewed. The user wants to satisfy a temporary desire of sharing information but does not want to leave permanent evidence.

For popular burn-after-reading software such as Snapchat at present, a most important function of this application is that each photo has a 1- to 10-second life span. After a user takes photos and sends the photos to a friend, the photos are destructed automatically according to a time pre-specified by the user. In addition, the user is notified if a receiver tries to take a screenshot during the time.

A disadvantage of the prior art is that all messages are burned after being read, but users cannot keep messages by personalized setting and not all users require "burn after reading" for all messages. Users expect to set some messages to burn-after-reading messages in an independent and personalized manner but to keep most messages unchanged. In this case, currently, some applications launch a recall function. However, a message can be recalled in only a predetermined time, and a user can no longer delete the message after the predetermined time. Moreover, this recall manner is an instant delete behavior but is not burn-after-reading, and therefore operations of users are inconvenient.

### SUMMARY

In view of this, embodiments of the present invention provide a method and an apparatus for setting a burn-after-reading message by means of a pressure. A user rapidly sets, by means of a force touch (force touch), a message that the user wants to delete, recall, or destruct to a burn-after-reading message, bringing great convenience and desirable experience to the user while protecting user privacy.

According to a first aspect, an embodiment of the present invention provides a method for setting a burn-after-reading message by means of a pressure. The method includes: displaying a message exchange interface, where the interface includes at least one message; detecting a pressure value of a screen touch on a first message by a user, where the first message is one of the at least one message; and setting the first message to a burn-after-reading message when it is detected that the pressure value is greater than a preset threshold.

In a possible design, the setting the first message to a burn-after-reading message includes: adding a burning time mark to the first message, where the burning time mark includes a time t, and the time t is used to instruct a receiving terminal or a server to delete the first message after the first message is received and the time t elapses.

In a possible design, the setting the first message to a burn-after-reading message includes: triggering a burn-after-reading mechanism in a terminal or an application to set the first message to a burn-after-reading message.

In a possible design, when a larger detected pressure value indicates a shorter or longer time t in the burning time mark added to the first message. A specific setting is preset by a system or the user.

In a possible design, after the setting the first message to a burn-after-reading message, the method further includes: displaying an indication icon, where the indication icon is used to inform the user that the first message is a burn-after-reading message.

In a possible design, the indication icon is a countdown icon, and the countdown icon is used to inform the user of a remaining time before the first message is deleted.

In a possible design, after the setting the first message to a burn-after-reading message and before the first message is deleted, if a screen touch operation on the indication icon by the user is detected, the method further includes: popping up prompt information, where the prompt information includes a restoration option, and the restoration option triggers cancellation of setting the first message to a burn-after-reading message.

In a possible design, if the first message is one of N messages, and the N messages are selected in batches and enter an editing state, the method further includes: setting all the N messages to burn-after-reading messages.

In a possible design, the preset threshold is greater than a pressure sensing value that can trigger a normal operation. A pressure that is not greater than the preset threshold can implement only selection of the first message or a simple editing operation on the first message.

In a possible design, real-time magnitude of the pressure may be positively correlated with or negatively correlated with t.

In a possible design, during adjustment of the pressure by the user, a prompt window may be popped up to inform the user of a time that corresponds to the pressure being applied. Alternatively, after the user holds the pressure for a period of time, the time t is determined according to an average value of strength in this period of time. Alternatively, a duration selection option is directly displayed in the prompt window for the user to select and determine the time t.

In a possible design, for multiple messages, burn-after-reading life spans may further be set to be different according to sizes of content of the messages. When the content is richer, a life span may be longer.

In a possible design, after a burn-after-reading message is burned, a deletion mark may be displayed, a recall mark may be displayed, or no trace may be displayed as if no message has ever been sent.

In a possible design, the burn-after-reading mechanism may further monitor or prevent saving or screenshot taking by another user by monitoring a specific operation or key.

According to a second aspect, an embodiment of the present invention provides an apparatus for setting a burn-after-reading message, that is, a smart device. The apparatus includes: a display module, configured to display a message exchange interface, where the interface includes at least one message; a detection module, configured to detect a pressure value of a screen touch on a first message by a user, where the first message is one of the at least one message displayed by the display module; and a setting module, configured to set the first message to a burn-after-reading message when the detection module detects that the pressure value is greater than a preset threshold.

In a possible design, the setting module is specifically configured to: add a burning time mark to the first message, where the burning time mark includes a time t, and the time t is used to instruct a receiving terminal or a server to delete the first message after the first message is received and the time t elapses.

In a possible design, the setting module is specifically configured to: trigger a burn-after-reading mechanism in a terminal or an application to set the first message to a burn-after-reading message.

In a possible design, when a larger pressure value detected by the detection module indicates a shorter time t in the burning time mark added by the setting module to the first message.

In a possible design, after setting the first message to a burn-after-reading message, the setting module is further configured to set an indication icon, where the indication icon is used to inform the user that the first message is a burn-after-reading message.

In a possible design, the indication icon is a countdown icon, and the countdown icon is used to inform the user of a remaining time before the first message is deleted.

In a possible design, after the setting module sets the first message to a burn-after-reading message, and before the first message is deleted, if the detection module detects a screen touch operation on the indication icon by the user, the setting module is further configured to: pop up prompt information, where the prompt information includes a restoration option, and the restoration option triggers cancellation of setting the first message to a burn-after-reading message.

In a possible design, if the first message is one of N messages, and the N messages are selected in batches and enter an editing state, the setting module is specifically configured to: set all the N messages to burn-after-reading messages.

According to a third aspect, an embodiment of the present invention provides a smart device, where the terminal includes at least: a display screen, a processor, a memory, and a bus; the display screen, the processor, and the memory are connected to and communicate with each other by using the bus; and the display screen is configured to receive an operation of a user, the memory stores a program and an instruction, and the processor invokes the program and the instruction that are in the memory, and is configured to perform and implement the foregoing method according to the operation of the user received by the display screen.

Embodiments of the present invention provide a method for setting a burn-after-reading message by means of a pressure. The method includes: displaying the message exchange interface, where the interface includes the at least one message; detecting the pressure value of the screen touch on the first message by the user, where the first message is one of the at least one message; and setting the first message to a burn-after-reading message when it is detected that the pressure value is greater than the preset threshold. By means of the method, the user can rapidly set, by means of a force touch (force touch), a message that the user wants to delete, recall, or destruct to a burn-after-reading message, controlling privacy of and attention to chat content in a personalized manner, and bringing great convenience and desirable experience to the user while protecting user privacy.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 shows an information exchange scenario in a group chat of a chat application;
FIG. 2 shows a method for setting a burn-after-reading message by means of a pressure according to an embodiment of the present invention;
FIG. 3 is a schematic diagram of a method for setting a burn-after-reading message by means of a force touch;
FIG. 4 is a schematic structural diagram of functional modules of a smart device according to an embodiment of the present invention; and
FIG. 5 is a schematic structural diagram of hardware of a smart device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention. Furthermore, there are details and explanations of many features in the following embodiments. To avoid too much redundancy, the details and the explanations are applicable to same features under same principles.

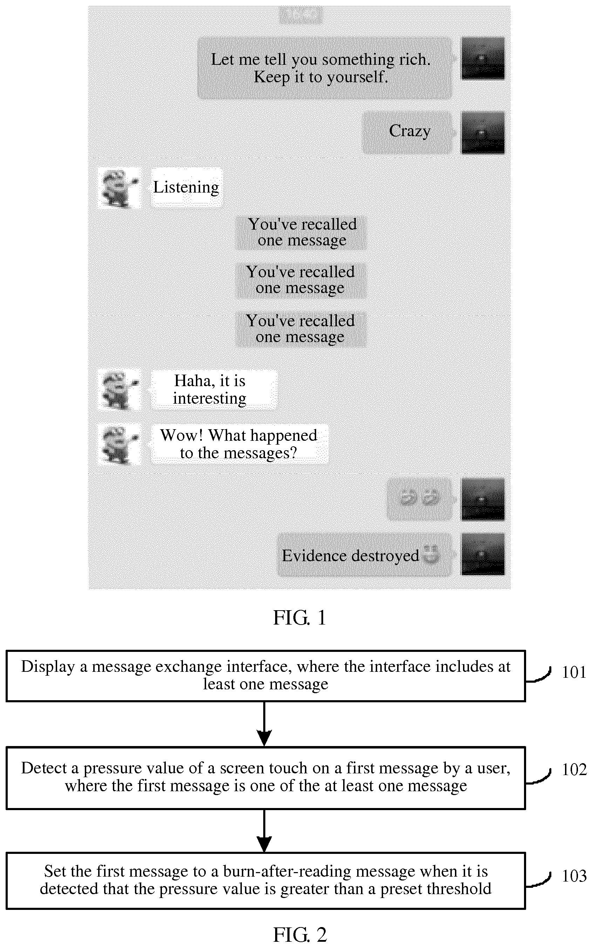

Referring to FIG. 1, FIG. 1 shows an information exchange scenario in a group chat of a chat application, For example, there is an information exchange using WeChat, QQ, Weibo, Tieba, Mop, Tianya, Douban, a short message service, and a multimedia messaging service. Online friends usually interact with each other and exchange a variety of information. However, in online communication, information becomes known to a wide public. For any user, all online friends are not close friends, and online friends are usually strangers who share interests. A user eagerly wants to share details of life with friends by using the Internet as a platform. Especially, people are usually very enthusiastic about some dramatic topics and make online socializing more exciting. However, these highly dramatic topics usually involve sensitive information. When personal private information is involved, nearly all users are very careful about the spread of information. A user wants to present sensitive messages but leave no evidence. Therefore, the user burns these messages after a specific time after these messages are posted. In this way, other people can no longer see these messages in a current chat application. By means of a method provided in the present invention, the user rapidly sets, by means of a force touch (force touch), a message that the user wants to delete, recall, or destruct to a burn-after-reading message, bringing great convenience and desirable experience to the user while protecting user privacy.

Referring to FIG. 2, FIG. 2 is a method for setting a burn-after-reading message by means of a pressure according to an embodiment of the present invention. The method specifically includes steps 101 to 103.

Step 101: Display a message exchange interface, where the interface includes at least one message.

Usually, the message exchange interface discussed in the present invention is specifically displayed by an exchange application on a smart device. The exchange application is a general concept that includes all applications such as QQ, Tieba, WeChat, Weibo, Renren, Mop, Qiushibaike, Jingdong, Taobao, mobile banking, a mobile service hall, Facebook, Twitter, Instagram, and various communities and forums that may be used by a user to post messages. The user may enter a message publishing interface and receive and send messages by means of some operations in the prior art. The smart device discussed in this patent includes, but is not limited to, a smartphone, a tablet computer, a wearable device, and another terminal device, especially, a mobile terminal device.

Step 102: Detect a pressure value of a screen touch on a first message by a user, where the first message is one of the at least one message.

When the user performs a screen touch operation on the first message, the smart device detects a location of the screen touch by the user, and an operation object corresponding to the location of the screen touch, and also detects the pressure value of the screen touch. These may be obtained by using a device such as a pressure sensor that is integrated into the screen of the smart device.

Step 103: Set the first message to a burn-after-reading message when it is detected that the pressure value is greater than a preset threshold.

This is one of innovative points of the present invention. Setting a message attribute is triggered by means of a force touch. In the prior art, a force touch is not distinguished from a touch operation with normal strength. The preset threshold discussed in the present invention is greater than a pressure sensing value that can trigger a normal operation. For example, when a pressure applied by the user reaches F1, the user may implement only selection of the first message or a simple editing operation on the first message. When the pressure applied by the user reaches F2, change of an attribute of the first message may be triggered, to set the first message from a message that may be permanently kept to a burn-after-reading message. F2 is greater than F1, and F2 is the preset threshold, and may be set at delivery by a manufacturer of the smart device, or may be customized by the user.

During specific implementation, when a screen-touch pressure applied by the user to the first message is greater than the preset threshold, a burn-after-reading function is triggered for the first message. An implementation form is to mark the attribute of the first message as a burn-after-reading function, a burn-after-reading mechanism included in the exchange application identifies the first message and performs burn-after-reading control and execution, and the burn-after-reading mechanism instructs a receiving terminal or a server to delete (burn) the first message after the first message is received and a predetermined time elapses. In another implementation form, a burning time mark is added to the first message, the burning time mark includes a time t, the time t is used to instruct the receiving terminal or the server to delete the first message after the first message is received and the time t elapses, and the first message becomes invisible to the user after being deleted. Specific duration of the time t may be set by default by the burn-after-reading mechanism, or may be customized by the user, or may be determined and selected by the user when a selection box for required burn-after-reading duration is popped up after the pressure of the user reaches the preset threshold.

In a possible design, after the pressure applied by the user to the first message is greater than the preset threshold, the user may set, by adjusting magnitude of the pressure applied to the first message, a time after which the message is to be burned. For example, a larger detected pressure value indicates a shorter time t in the burning time mark added to the first message; or a larger detected pressure value indicates a longer time t in the burning time mark added to the first message. Real-time magnitude of the pressure may be positively correlated with or negatively correlated with t. During adjustment of the pressure by the user, a prompt window may be popped up to inform the user of a time that corresponds to the pressure being applied. Alternatively, after the user holds the pressure for a period of time, the time t is determined according to an average value of strength in this period of time. Alternatively, a duration selection option is directly displayed in the prompt window for the user to select and determine the time t. Alternatively, the time t is set after the time t is determined by using another manner. Therefore, by using this method, the user may flexibly set a time point of burning the first message, thereby effectively controlling a life span of the first message.

In a possible design, after the first message is set to a burn-after-reading message, the user may further choose to display an indication icon beside the first message, and the indication icon is used to inform the user that the first message is a burn-after-reading message, but the indication icon is invisible to another user. Information of this type is usually private and sensitive information.

In a possible design, after a setting module sets the first message to a burn-after-reading message, the setting module may further choose to set the indication icon beside the first message, and a first icon is visible to all users, and is used to inform all the users that the first message is a burn-after-reading message and used to remind all the users to focus on the first message. The users need to view the message in time before the message disappears permanently. Such a message is not necessarily private and sensitive information, and may be a time-sensitive message.

Specifically, a first indication identifier may alternatively be a countdown that is used to remind the user to read the information as soon as possible, and may clearly remind the user of a remaining time to browse the message, so that the user is intuitively aware of the life span of the information. In this way, other users may pay more attention to the message sent by the user.

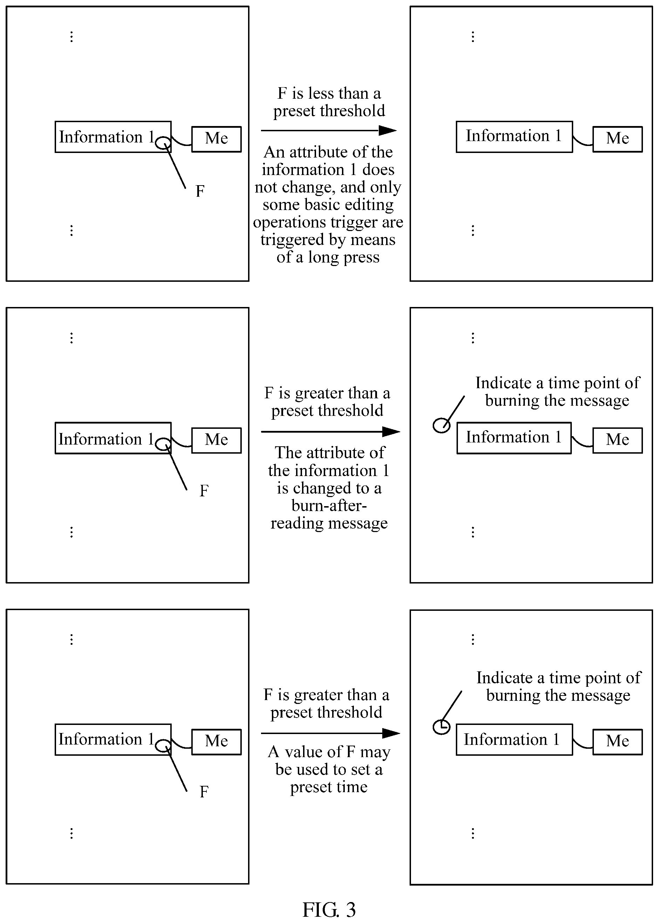

A specific operation of the user is shown in FIG. 3. FIG. 3 is a schematic diagram of a method for setting a burn-after-reading message by means of a force touch. For example, the preset threshold is 2 N. Assuming that a force applied by the user is F, when F is less than or equal to 2 N, an attribute changing operation is not triggered for a message, and basic editing is triggered by means of a long press. Once F is greater than 2 N, a setting function for a burn-after-reading attribute is triggered for the message. After a burn-after-reading mechanism is successfully set, an identifier may be added to indicate that the message is no longer a normal message, but is a burn-after-reading message. A specific form of an indication identifier is not limited. During specific implementation, when the pressure value is greater than the preset threshold, the burn-after-reading mechanism may determine a specific life span of the message according to real-time magnitude of a pressure applied by the user or an average value of the pressure applied in a time period.

It should be understood that the screen touch operation at the first message discussed in the present invention means a screen touch at a display location that is on a current screen and that corresponds to the first message, and the screen touch operation at the location of the screen touch can trigger basic identification and editing operations for the first message.

Due to different operation scenarios of the user, there are a variety of implementations of the technical solutions. Any technical solution and application scenario that is equivalent or may be used as a replacement should fall within the protection scope of the present invention.

It should also be noted that, in this embodiment of the present invention, a graphic label in the accompanying drawing is merely a representation, but does not limit the location of the screen touch and a size of a range of the screen touch during actual operation. Because the user has diverse use operations, any operation of which a function may be equivalent to a functional effect of an operation in the present invention should fall with the technical solutions of the present invention. Details are not described again in the following.

During specific implementation of this embodiment of the present invention, if the user sets in batches multiple messages on a display interface to burn-after-reading messages, first, the multiple messages may be selected in batches to enable the multiple messages to enter an editing state. A force screen touch is then performed on any message of the multiple messages. When the pressure is greater than the preset threshold, the multiple messages are set in batches to burn-after-reading messages. A piece of indication information may be separately beside each message, to indicate, to the user or other users, that all the messages are already burn-after-reading messages. Furthermore, for the multiple messages, burn-after-reading life spans may further be set to be different according to sizes of content of the messages. When the content is richer, a life span may be longer. These may be determined by using the pressure value in coordination with the burn-after-reading mechanism according to a particular algorithm.

During specific implementation of this embodiment of the present invention, before the first message is burned, if the user wants to change the attribute of the first message back to a normal message that may be permanently displayed, the user may tap the indication icon or another specific icon. When the indication icon or the other specific icon is tapped, prompt information may be popped up. The prompt information includes a functional option for restoring a message attribute, and the functional option for restoration triggers cancellation of setting the first message to a burn-after-reading message. In this case, flexible operations of the user are facilitated, and the user may set, in a personalized manner, whether the message has a burn-after-reading attribute and effectively control privacy of and attention to chat content.

In a possible design, after a burn-after-reading message is burned, a deletion mark may be displayed, a recall mark may be displayed, or no trace may be displayed as if no message has ever been sent.

In a possible design, the burn-after-reading mechanism may further monitor or prevent saving or screenshot taking by another user by monitoring a specific operation or key.

This embodiment of the present invention provides a method for setting a burn-after-reading message by means of a pressure. The method includes: displaying the message exchange interface, where the interface includes the at least one message; detecting the pressure value of the screen touch on the first message by the user, where the first message is one of the at least one message; and setting the first message to a burn-after-reading message when it is detected that the pressure value is greater than the preset threshold. By means of the method, the user can rapidly set, in a personalized manner by means of a force touch (force touch), a message that the user wants to delete, recall, or destruct to a burn-after-reading message, bringing great convenience and desirable experience to the user while protecting user privacy. By implementing multiple examples, the user can effectively control privacy of and attention to chat content.

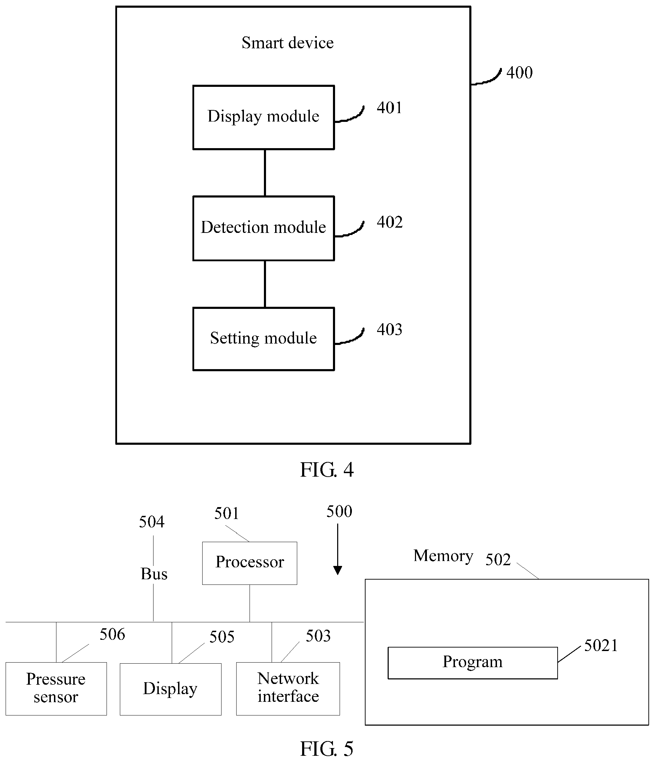

Referring to FIG. 4, FIG. 4 is a schematic structural diagram of functional modules of a smart device according to an embodiment of the present invention. The smart device is an apparatus for setting a burn-after-reading message by means of a pressure according to the present invention. An apparatus/smart device 400 may be a wearable device, a smartphone, a tablet, or another smart device, especially, a mobile smart device. The smart device 400 includes a display module 401, a detection module 402, and a setting module 403.

The display module 401 is configured to display a message exchange interface, where the interface includes at least one message. An obtaining module may be implemented by using a built-in exchange application on a mobile phone or a third-party exchange application.

The detection module 402 is configured to detect a pressure value of a screen touch on a first message by a user, where the first message is one of the at least one message displayed by the display module 401. The detection module 402 may be implemented by using a pressure sensor integrated into a screen of the mobile phone, and a processor invokes a particular program to perform specific analysis.

The setting module 403 is configured to set the first message to a burn-after-reading message when the detection module 402 detects that the pressure value is greater than a preset threshold. The setting module 403 may be implemented by invoking a particular program by the processor. During specific implementation, a built-in burn-after-reading mechanism of the smart device or a burn-after-reading mechanism included in a current exchange application may be triggered by means of a force touch.

During specific implementation, whether the setting module triggers setting a burn-after-reading function mainly depends on whether a pressure detected by the detection module is greater than the preset threshold. The preset threshold may be set at delivery by a manufacturer of the smart device, or may be customized by the user.

In a possible implementation, the setting module may be triggered by a force touch to mark an attribute of the first message as the burn-after-reading function, the burn-after-reading mechanism included in the exchange application identifies the first message and performs burn-after-reading control and execution, and the burn-after-reading mechanism instructs a receiving terminal or a server to delete the first message after the first message is received and a predetermined time elapses. In another implementation form, a burning time mark is added to the first message, the burning time mark includes a time t, the time t is used to instruct the receiving terminal or the server to delete the first message after the first message is received and the time t elapses, and the first message becomes invisible to the user after being deleted. Specific duration of the time t may be set by default by the burn-after-reading mechanism, or may be customized by the user, or may be determined and selected by the user when a selection box for required burn-after-reading duration is popped up after the pressure of the user reaches the preset threshold.

In a possible design, after the pressure applied by the user to the first message is greater than the preset threshold, the user may set, by adjusting magnitude of the pressure applied to the first message, a time after which the message is to be burned. For example, a larger detected pressure value indicates a shorter or longer time t in the burning time mark added to the first message. Real-time magnitude of the pressure may be positively correlated with or negatively correlated with t. During adjustment of the pressure by the user, the display module may further pop up a prompt window to inform the user of a time that corresponds to the pressure being applied. Alternatively, after the user holds the pressure for a period of time, the time t is determined according to an average value of strength in this period of time. Alternatively, a duration selection option is directly displayed in the prompt window for the user to select and determine the time t. Alternatively, the time t is set after the time t is determined by using another manner.

In a possible design, after the setting module sets the first message to a burn-after-reading message, the setting module may set an indication icon beside the first message, and the indication icon is used to inform the user that the first message is a burn-after-reading message, but the indication icon is invisible to another user. Information of this type is usually private and sensitive information.

In a possible design, after setting the first message to a burn-after-reading message, the user may further choose to display the indication icon beside the first message, and a first icon is visible to all users, and is used to inform all the users that the first message is a burn-after-reading message and used to remind all the users to focus on the first message. The users need to view the message in time before the message disappears permanently. Such a message is not necessarily private and sensitive information, and may be a time-sensitive message. Specifically, a first indication identifier may alternatively be a countdown that is used to remind the user to read the information as soon as possible, and may clearly remind the user of a remaining time to browse the message, so that the user is intuitively aware of the life span of the information. In this way, other users may pay more attention to the message sent by the user.

During specific implementation of this embodiment of the present invention, if the user sets in batches multiple messages on a display interface to burn-after-reading messages, first, the multiple messages may be selected in batches by using a selection mechanism to enable the multiple messages to enter an editing state. A force screen touch is then performed on any message of the multiple messages. When the detection module detects that the pressure is greater than the preset threshold, the multiple messages are set in batches to burn-after-reading messages. A piece of indication information may be displayed beside each message, to indicate, to the user or other users, that all the messages are already burn-after-reading messages. Furthermore, for the multiple messages, the setting module may further set different burn-after-reading life spans according to sizes of content of the messages. When the content is richer, a life span may be longer. These may be determined by using the pressure value in coordination with the burn-after-reading mechanism according to a particular algorithm.

During specific implementation of this embodiment of the present invention, before the first message is burned, if the user wants to change the attribute of the first message back to a normal message that may be permanently displayed, the user may tap the indication icon or another specific icon. There is a functional option for restoring a message attribute in the indication icon or the other specific icon. The detection module detects a screen touch operation on the indication icon by the user, and the setting module is further configured to: pop up prompt information. The prompt information includes a restoration option for the user to select, and the restoration option can trigger cancellation of setting the first message to a burn-after-reading message. In this case, flexible operations of the user are facilitated, and the user may set, in a personalized manner, whether the message has a burn-after-reading attribute and effectively control privacy of and attention to chat content.

In a possible design, after a burn-after-reading message is burned, the display module may display a deletion mark, display a recall mark, or display no trace as if no message has ever been sent.

In a possible design, the burn-after-reading mechanism may further monitor or prevent saving or screenshot taking by another user by monitoring a specific operation or key.

An equivalent concept corresponding to the foregoing method embodiments is not described herein again. Any equivalent replacement made without creative efforts by a person of ordinary skill in the art shall fall within the protection scope of the present invention, without being affected by differences between and constraints of methods and apparatuses.

This embodiment of the present invention provides the smart device 400. The smart device includes the display module 401, the detection module 402, and the setting module 403. By means of the terminal, when the message is displayed by using the display module 401, the user can trigger, by means of a force touch detected by the detection module 402, the setting module 403 to change the attribute of the message about the a force touch being performed to a burn-after-reading message. In this way, the user can rapidly set, in a personalized manner by means of a force touch (force touch), a message that the user wants to delete, recall, or destruct to a burn-after-reading message, controlling privacy of and attention to chat content, and bringing great convenience and desirable experience to the user while protecting user privacy.

Referring to FIG. 5, FIG. 5 is a schematic structural diagram of hardware of a smart device according to an embodiment of the present invention. A smart device 500 includes at least one processor 501 (for example, a CPU), a memory 502, at least one network interface 503, at least one communications bus 504, a display 505, and a pressure sensor 506. The processor 501, the memory 502, the network interface 503, the display 505, and the pressure sensor 506 are connected to and communicate with each other by using the communications bus 504, so as to collaborate to complete functions of the smart device.

The processor 501 is configured to execute an executable instruction module 5021 such as a computer program, an instruction, or other data, stored in the memory 502. The pressure sensor 506 is configured to sense a pressure, and may obtain a value of the pressure. Generally, the pressure sensor 506 and the display 505 are integrated. The memory 502 may include a high-speed random access memory (RAM: Random Access Memory), and may further include a non-volatile memory (non-volatile memory), for example, at least an eMMC (Embedded Multi Media Card, embedded multimedia card) memory. Communication and connection between the network device and at least another network element are implemented by means of the at least one network interface 503 (which may be wired or wireless), and the Internet, a wide area network, a local area network, a metropolitan area network, or the like may be used.

The executable instruction module 5021 stores a functional program for implementing the method of the present invention, including, but being not limited to, the method corresponding to the foregoing steps 101 to 103 and methods that may be equivalently replaced. In this way, the processor 501, in combination with the display 505 and the pressure sensor 506, performs the methods in the foregoing embodiments and equivalent methods by invoking the program and instruction in the executable instruction module 5021.

Content such as information exchange and an execution process between the modules in the apparatus and the system is based on a same idea as the method embodiments of the present invention. Therefore, for detailed content, refer to descriptions in the method embodiments of the present invention, and details are not described herein again.

It should be noted that, to make the description brief, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily limited to the present invention.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

Specific examples are used in this specification to describe the principle and implementation manners of the present invention. The descriptions of the foregoing embodiments are merely intended to help understand the method and idea of the present invention. In addition, with respect to the implementation manners and the application scope, modifications may be made by a person of ordinary skill in the art according to the idea of the present invention. Therefore, this specification shall not be construed as a limitation on the present invention.

## Claims

1. A method for setting a burn-after-reading message by means of a pressure, wherein the method comprises:
displaying a message exchange interface, wherein the interface comprises at least one message;
detecting a pressure value of a screen touch on a first message by a user, wherein the first message is one of the at least one message; and
setting the first message to a burn-after-reading message when it is detected that the pressure value is greater than a preset threshold.

2. The method according to claim 1, wherein the setting the first message to a burn-after-reading message comprises: adding a burning time mark to the first message, wherein the burning time mark comprises a time t, and the time t is used to instruct a receiving terminal or a server to delete the first message after the first message is received and the time t elapses.

3. The method according to claim 1, wherein the setting the first message to a burn-after-reading message comprises: triggering a burn-after-reading mechanism in a terminal or an application to set the first message to a burn-after-reading message.

4. The method according to claim 2, wherein when a larger detected pressure value indicates a shorter time t in the burning time mark added to the first message.

5. The method according to any one of claims 1 to 4, wherein after the setting the first message to a burn-after-reading message, the method further comprises: displaying an indication icon, wherein the indication icon is used to inform the user that the first message is a burn-after-reading message.

6. The method according to claim 5, wherein the indication icon is a countdown icon, and the countdown icon is used to inform the user of a remaining time before the first message is deleted.

7. The method according to claim 5 or 6, wherein after the setting the first message to a burn-after-reading message and before the first message is deleted, if a screen touch operation on the indication icon by the user is detected, the method further comprises: popping up prompt information, wherein the prompt information comprises a restoration option, and the restoration option triggers cancellation of setting the first message to a burn-after-reading message.

8. The method according to any one of claims 1 to 7, wherein if the first message is one of N messages, and the N messages are selected in batches and enter an editing state, the method further comprises: setting all the N messages to burn-after-reading messages.

9. An apparatus for setting a burn-after-reading message by means of a pressure, wherein the apparatus comprises:
a display module, configured to display a message exchange interface, wherein the interface comprises at least one message;
a detection module, configured to detect a pressure value of a screen touch on a first message by a user, wherein the first message is one of the at least one message displayed by the display module; and
a setting module, configured to set the first message to a burn-after-reading message when the detection module detects that the pressure value is greater than a preset threshold.

10. The apparatus according to claim 9, wherein the setting module is specifically configured to: add a burning time mark to the first message, wherein the burning time mark comprises a time t, and the time t is used to instruct a receiving terminal or a server to delete the first message after the first message is received and the time t elapses.

11. The apparatus according to claim 9, wherein the setting module is specifically configured to: trigger a burn-after-reading mechanism in a terminal or an application to set the first message to a burn-after-reading message.

12. The apparatus according to claim 10, wherein when a larger pressure value detected by the detection module indicates a shorter time t in the burning time mark added by the setting module to the first message.

13. The apparatus according to any one of claims 9 to 12, wherein after setting the first message to a burn-after-reading message, the setting module is further configured to set an indication icon, wherein the indication icon is used to inform the user that the first message is a burn-after-reading message.

14. The apparatus according to claim 13, wherein the indication icon is a countdown icon, and the countdown icon is used to inform the user of a remaining time before the first message is deleted.

15. The apparatus according to claim 13 or 14, wherein after the setting module sets the first message to a burn-after-reading message, and before the first message is deleted, if the detection module detects a screen touch operation on the indication icon by the user, the setting module is further configured to: pop up prompt information, wherein the prompt information comprises a restoration option, and the restoration option triggers cancellation of setting the first message to a burn-after-reading message.

16. The apparatus according to any one of claims 9 to 15, wherein if the first message is one of N messages, and the N messages are selected in batches and enter an editing state, the setting module is further configured to: set all the N messages to burn-after-reading messages.

17. A smart device, wherein the terminal comprises at least: a display screen, a processor, a memory, and a bus; the display screen, the processor, and the memory are connected to and communicate with each other by using the bus; and the display screen is configured to receive an operation of a user, the memory stores a program and an instruction, and the processor invokes the program and the instruction that are in the memory, and is configured to implement the method according to any one of claims 1 to 8 according to the operation of the user received by the display screen.
